# EUROPÄISCHE PATENTSCHRIFT

(11) **EP 4 344 848 B1**
(45) Veröffentlichungstag und Bekanntmachung des Hinweises auf die Patenterteilung: **11.02.2026**
(21) Anmeldenummer: 23020428.1
(22) Anmeldetag: 14.09.2023
(51) Int. Cl.: B29C 45/33

(54) **SPRITZGEGOSSENER HOHLKÖRPER, VORRICHTUNG ZUM HERSTELLEN EINES SOLCHEN UND VERSTELLBARER FLUIDVERTEILER MIT EINEM SOLCHEN**
INJECTION MOULDED HOLLOW BODY, DEVICE FOR PRODUCING SAME AND ADJUSTABLE FLUID DISTRIBUTOR COMPRISING SAME
CORPS CREUX MOULÉ PAR INJECTION, DISPOSITIF POUR SA FABRICATION ET DISTRIBUTEUR DE FLUIDE RÉGLABLE COMPRENANT UN TEL CORPS CREUX

(30) Priorität: 23.09.2022 DE 102022003513; 12.09.2023 DE 102023124558
(43) Veröffentlichungstag der Anmeldung: 03.04.2024
(73) Patentinhaber: Voss Automotive GmbH, 51688 Wipperfürth (DE)
(72) Erfinder: ERB, Ulrich, 51145 Köln (DE)
(74) Vertreter: Rebbereh, Cornelia

(56) Entgegenhaltungen:
- DE-A1- 102018 009 680
- DE-A1- 102021 000 262

## Beschreibung

Die Erfindung betrifft einen spritzgegossenen Hohlkörper, insbesondere rotationssymetrischen spritzgegossenen Hohlkörper, umfassend zumindest eine Umfangswandung mit einer Innenseite und einer Außenseite und mit zumindest einer die Umfangswandung durchdringenden Durchgangsöffnung, wobei die zumindest eine Umfangswandung zumindest auf ihrer Innenseite eine Neigung in einem Entformungswinkel zur Senkrechten aufweist, einen verstellbaren Fluidverteiler, insbesondere ein Rotationsventil, mit zumindest einem Gehäuse und zumindest einem Ventilkörper innerhalb des zumindest einen Gehäuses, wobei der zumindest eine Ventilkörper drehbar und/oder verschiebbar innerhalb des Gehäuses angeordnet ist, und wobei das zumindest eine Gehäuse außenseitig mit zumindest einem Anschlussstutzen versehbar oder versehen ist, eine Vorrichtung zum Herstellen eines solchen spritzgegossenen Hohlkörpers, wobei die Vorrichtung zumindest eine Spritzgussaußenform und zumindest einen Spritzgusskern umfasst, wobei der zumindest eine Spritzgusskern und die zumindest eine Spritzgussaußenform zwischen sich einen Hohlraum bilden, in den Kunststoffmaterial zum Ausbilden des spritzgegossenen Hohlkörpers einströmbar ist oder eingeströmt wird, wobei der zumindest eine Spritzgusskern konisch zulaufend geformt ist mit einer einem Entformungswinkel entsprechenden Neigung seiner Außenseite zum Unterstützen des Entformens des spritzgegossenen Hohlkörpers, sowie ein Fahrzeug, insbesondere Fahrzeug mit Verbrennungsmotor, Brennstoffzellen-Fahrzeug, batterieelektisch betriebenes Fahrzeug, Plug-in-Hybrid-Fahrzeug, umfassend zumindest einen verstellbaren Fluidverteiler in einem Thermomanagementsystem des Fahrzeugs.

Spritzgegossene, insbesondere rotationssymmetrische spritzgegossene, Hohlkörper, sind im Stand der Technik bekannt. Diese werden insbesondere als Gehäuse für verstellbare Fluidverteiler, wie Rotationsventile, verwendet, wie sie beispielsweise aus der DE 10 2018 009 680 A1 bekannt sind. Die spritzgegossenen Hohlkörper weisen eine Umfangswandung mit einer Innenseite und einer Außenseite und außenseitigen Anschlussstutzen und dementsprechend in der Umfangswandung eingebrachte Durchgangsöffnungen auf, damit aus dem Inneren des spritzgegossenen Hohlkörpers Medium durch die jeweiligen Durchgangsöffnungen in der Umfangswandung hindurch in die Anschlussstutzen und durch diese in daran angeschlossene Medienleitungen strömen kann. Zum Herstellen derartiger spritzgegossener Hohlkörper kann eine Vorrichtung verwendet werden, die eine Spritzgussaußenform und einen Spritzgusskern umfasst, wobei der Spritzgusskern und die Spritzgussaußenform zwischen sich einen Hohlraum bilden, in den Kunststoffmaterial zum Ausbilden des spritzgegossenen Hohlkörpers eingeströmt wird. Um ein Entformen zu ermöglichen, ist es ferner bekannt, den Spritzgusskern konisch zulaufend zu formen mit einer einem Entformungswinkel entsprechenden Neigung seiner Außenseite zur Senkrechten, also der Hochachse des Spritzgusskerns bzw. auch der Spritzgussaußenform und auch des dann in dem Hohlraum zwischen diesen ausgebildeten spitzgegossenen Hohlkörpers. Hierdurch wird auch die Umfangswandung des spritzgegossenen Hohlkörpers konisch zulaufend geformt, so dass in Richtung der größeren Öffnungsweite des Hohlkörpers ein Entformen möglich wird. Die zumindest eine Umfangswandung des spritzgegossenen Hohlkörpers weist somit zumindest auf ihrer Innenseite eine Neigung in einem Entformungswinkel zur Senkrechten auf, um den hergestellten spritzgegossenen Hohlkörper entformen zu können. Dies bedeutet, dass zumindest auf der Innenseite des spritzgegossenen Hohlkörpers dessen Umfangswandung einen Neigungswinkel zur Senkrechten aufweist, um eine Entformungsschräge zu bilden und ein Entformen, somit ein Entfernen des zum Ausbilden des spritzgegossenen Hohlkörpers erforderlichen Spritzgusskerns zu ermöglichen.

Gerade im Bereich der in der Umfangswandung des spritzgegossenen Hohlkörpers ausgebildeten Durchgangsöffnungen, die einen Übergang zu Anschlussstutzen, die sich dort anschließen, schaffen, entstehen durch die dort angeordneten Innenkerne zum Ausbilden der Durchgangsöffnungen und Anschlussstutzen Trenngrate. Bei der späteren Verwendung des spritzgegossenen Hohlkörpers beispielsweise als Gehäuse eines Rotationsventils, wie bei der DE 10 2018 009 680 A1, können diese Trenngrate im Bereich der Durchgangsöffnungen zu den außenseitig am Hohlkörper angeordneten Anschlussstutzen dazu führen, dass dort anliegende Elemente, wie Dichtelemente, beschädigt werden, wenn sich ein im Innern des spritzgegossenen Hohlkörpers angeordneter Ventilkörper gegenüber dem Gehäuse bewegt, also dreht und/oder verschoben wird. Aufgrund der schabenden Beaufschlagung der beispielsweise Dichtelemente durch die Trenngrate kann sich deren funktionsgerechte Lebensdauer verringern, so dass Leckagewege innerhalb eines solchen Rotationsventils, das einen solchen spritzgegossenen Hohlkörper als Gehäuse umfasst, entstehen können. Zusätzlich oder alternativ besteht das weitere Problem, dass beim Bewegen eines Ventilkörpers innerhalb des als Gehäuse eines Rotationsventils dienenden spritzgegossenen Hohlkörpers das hierfür erforderliche Drehmoment bzw. die hierfür erforderliche Kraft zum Verschieben des Ventilkörpers sich aufgrund der Trenngrate erhöht. Die Trenngrate können in den Bewegungsweg des Ventilkörpers im Inneren des spritzgegossenen Hohlkörpers hineinragen und dementsprechend zu einer Erhöhung des Drehmoments beim Drehen des Ventilkörpers innerhalb des spritzgegossenen Hohlkörpers bzw. der Kraft beim Verschieben des Ventilkörpers gegenüber dem als Gehäuse dienenden spritzgegossenen Hohlkörper eines Ventils führen. Die Trenngrate können andererseits auch in Umfangsrichtung ausgebildet sein, zwar nicht in den Bewegungsweg hineinragen, jedoch dennoch ein Dichtelement schädigen, da dieses aus elastischem Material besteht und sich dementsprechend in den freien Raum der Durchgangsöffnung(en) ausdehnt und hierbei durch die Trenngrate beschädigt werden kann.

Aus der DE 10 2021 000 262 A1 ist eine Massenstromsteuerungseinrichtung zum Steuern von Massenströmen in einem Mediumverteilsystem bekannt, die ein Gehäuse mit zumindest einem Gehäuseteil, zumindest einen Aktuator, zumindest ein innerhalb des zumindest einen Gehäuseteils drehbar anordbares oder angeordnetes Ventilelement und zumindest zwei Strömungsdurchlässen umfasst, von denen zumindest einer zum Einströmen von Medium in die Massenstromsteuerungseinrichtung dient und zumindest einer zum Ausströmen des Mediums aus dieser. Der Aktuator ist an das Ventilelement ankoppelbar oder angekoppelt zum drehenden Positionsverstellen des Ventilelements. Das Gehäuse oder der zumindest eine Gehäuseteil ist in Richtung seiner Längserstreckung mit zumindest einer Sammelleitung versehen, die mit zumindest einem der Strömungsdurchlässe versehen oder strömungsverbindbar oder -verbunden ist. Die Sammelleitung weist zumindest eine Übergabekontur in Richtung des Ventilelements auf. Das Ventilelement ist mit zumindest einer außenseitigen Strömungskontur und mit zumindest einer mit dieser strömungsverbindbaren oder -verbundenen Steuerkontur versehen, wobei die außenseitige Strömungskontur in Strömungsverbindung mit einem der Strömungsdurchlässe bringbar ist oder steht und wobei die zumindest eine Steuerkontur des Ventilelements mit der zumindest einen Übergabekontur in Strömungsverbindung gebracht werden kann oder steht.

Die im Bereich der Übergänge bzw. Durchgangsöffnungen in der Umfangswandung des spritzgegossenen Hohlkörpers nach dessen Spritzgießen verbleibenden Grate bzw. Trenngrate können sich gerade bei gefüllten Kunststoffen als besonders problematisch erweisen, wenn dort Dichtelemente oder andere empfindliche Elemente zur Anlage kommen bzw. darüber hinweg bewegt werden. Gerade bei gefüllten Kunststoffen können in dem Bereich solcher Grate bzw. Trenngrate die eingebrachten Fasern bzw. Glasfasern besonders abtragend wirken und somit Beschädigungen an Dichtelementen etc. hervorrufen.

Der vorliegenden Erfindung liegt daher die Aufgabe zugrunde, einen spritzgegossenen Hohlkörper, einen verstellbaren Fluidverteiler, insbesondere ein Rotationsventil, mit einem solchen spritzgegossenen Hohlkörper sowie eine Vorrichtung zum Herstellen eines solchen spritzgegossenen Hohlkörpers und ein Fahrzeug mit zumindest einem verstellbaren Fluidverteiler zu schaffen, wobei die vorstehend genannten Nachteile nicht mehr auftreten und durch Gratbildung im Übergangsbereich um Durchgangsöffnungen in der Umfangswandung des spritzgegossenen Hohlkörpers herum hervorgerufene Beschädigungen an Dichtelementen und/oder einem Ventilkörper eines Fluidverteilers, welcher Ventilkörper innerhalb des spritzgegossenen Hohlkörpers drehbar und/oder verschiebbar angeordnet ist, wirksam vermieden werden können.

Die Aufgabe wird für einen spritzgegossenen Hohlkörper nach dem Oberbegriff des Anspruchs 1 dadurch gelöst, dass die zumindest eine Durchgangsöffnung von einem freigestellten Bereich umgeben ist, wobei in dem freigestellten Bereich der Neigungswinkel der Umfangswandung von dem außerhalb des freigestellten Bereichs abweicht zum Vermeiden einer Gratbildung im Übergangsbereich von der Innenseite der Umfangswandung zur zumindest einen Durchgangsöffnung in dieser und zum Vermeiden von durch Gratbildung hervorgerufenen Beschädigungen an mit der Innenseite der Umfangswandung des spritzgegossenen Hohlkörpers in Kontakt tretenden Elementen, wobei der freigestellte Bereich nach Art einer Ausnehmung in die Umfangswandung eingeformt ist. Die Aufgabe wird für einen verstellbaren Fluidverteiler, insbesondere ein Rotationsventil, nach dem Oberbegriff des Anspruchs 9 dadurch gelöst, dass das zumindest eine Gehäuse aus einem solchen spritzgegossenen Hohlkörper gebildet ist. Für eine Vorrichtung nach dem Oberbegriff des Anspruchs 10 wird die Aufgabe dadurch gelöst, dass der zumindest eine Spritzgusskern mit zumindest einem auskragenden, eine von dem Entformungswinkel abweichenden Neigungswinkel aufweisenden Bereich zum Ausbilden eines zumindest eine Durchgangsöffnung umgebenden freigestellten Bereichs des spritzgegossenen Hohlkörpers versehen ist. Für ein Fahrzeug nach dem Oberbegriff des Anspruchs 11 wird die Aufgabe dadurch gelöst, dass der zumindest eine verstellbare Fluidverteiler des Thermomanagementsystems einen solchen spritzgegossenen Hohlkörper enthält. Weiterbildungen der Erfindung sind in den abhängigen Ansprüchen definiert.

Dadurch wird ein spritzgegossener Hohlkörper geschaffen, also ein Hohlkörper, der durch Spritzgießen hergestellt ist, der eine Umfangswandung aufweist, die zumindest auf ihrer Innenseite eine Entformungsschräge, somit eine Neigung in einem Entformungswinkel zur Senkrechten, aufweist, also zur Hochachse des spritzgegossenen Hohlkörpers. Die Referenzlinie zum Bestimmen der Neigung der Umfangswandung auf deren Innenseite bzw. des Entformungswinkels ist somit die Senkrechte bzw. eine zur Hochachse des spritzgegossenen Hohlkörpers parallele Achse oder Linie. Um die Durchgangsöffnungen der Umfangswandung herum ist jeweils zumindest ein freigestellter Bereich vorgesehen. Unter diesem freigestellten Bereich wird ein die Durchgangsöffnung vollständig umgebender Bereich verstanden, in dem der Neigungswinkel der Umfangswandung von der außerhalb des freigestellten Bereichs abweicht. Hierdurch kann zwar eine Gratbildung beim Entformen des spritzgegossenen Hohlkörpers um die Durchgangsöffnung herum, also in dem Übergangsbereich von dem freigestellten Bereich zu der diesen umgebenden Fläche auf der Innenseite der Umfangswandung, nicht vollständig vermieden werden. Jedoch kommt der Grat aufgrund des Freistellens durch Vorsehen des zumindest einen freigestellten Bereichs nicht mehr in Kontakt mit innerhalb des spritzgegossenen Hohlkörpers mit der Innenseite von dessen Umfangswandung in Kontakt tretenden Elementen, wie einem Ventilkörper bzw. Drehschieber, der innerhalb des als Gehäuse eines verstellbaren Fluidverteilers, insbesondere Rotationsventils, ausgebildeten spritzgegossenen Hohlkörpers drehbar und/oder verschiebbar angeordnet wird/ist, und/oder einem Dichtelement zum Abdichten eines Ventilkörpers gegenüber dem spritzgegossenen Hohlkörper, und kann daher die vorstehend zum Stand der Technik genannten nachteiligen Wirkungen auf diese nicht mehr entfalten. Beim Entformen des spitzgegossenen Hohlkörpers kann hierdurch somit eine Gratbildung um die Durchgangsöffnung(en) nicht vollständig vermieden werden, jedoch die Problematik, dass dort zur Anlage kommende oder sich darüber hinweg bewegende weiche Elemente, wie Dichtelemente und/oder ein Ventilkörper, durch die vorstehenden Grate, wie dies im Stand der Technik auftritt, beschädigt werden. Dies wird durch das Vorsehen der entsprechend freigestellten Bereiche um die Durchgangsöffnungen in der Umfangswandung des spritzgegossenen Hohlkörpers herum erreicht.

Zumindest auf seiner Innenseite ist der spitzgegossene Hohlkörper weiterhin leicht konisch zulaufend geformt, beispielsweise in einem Entformungswinkel von 2 ° bis 3 ° zur Senkrechten, wobei im freigestellten Bereich um eine jeweilige Durchgangsöffnung in der Durchgangswandung herum ein anderer Neigungswinkel bzw. Entformungswinkel vorgesehen wird. Durch das Vorsehen des von dem Neigungs- bzw. Entformungswinkel der Umfangswandung abweichenden Neigungs- bzw. Entformungswinkels im freigestellten Bereich, also der unterschiedlichen Neigung der Umfangswandung außerhalb des jeweiligen freigestellten Bereichs gegenüber der innerhalb des freigestellten Bereichs, wird ein von einem Maximalwert in Richtung eines Minimalwerts abnehmender radialer Abstand zwischen dem freigestellten Bereich und dem diesen umgebenden Bereich der Umfangswandung geschaffen. Es wird somit keine Zwangsentformung vorgesehen, sondern der freigestellte Bereich um die jeweilige Durchgangsöffnung in der Umfangswandung herum weist ebenfalls einen Entformungswinkel auf, so dass ein Entformen des spitzgegossenen Hohlkörpers auch in diesem Bereich möglich ist. Unter einer Zwangsentformung versteht man einen Hinterschnitt in einer Wandung des spritzgegossenen Hohlkörpers, aus dem der Spritzgusskern mit Gewalt unter Aufweiten des Hohlkörpers gezogen wird. Würde vorliegend eine Zwangsentformung vorgesehen, erwiesen sich deren nachteilige Auswirkungen auf die Geometrie der Innenfläche des spritzgegossenen Hohlkörpers und prozesstechnische Nachteile als sehr negativ, da das spritzgegossene Bauteil in Form des spritzgegossenen Hohlkörpers in einem warmen bzw. thermischen Zustand entformt wird, der ein Zwangsentformen zulässt, nämlich in einem halb weichen Zustand. In diesem halb weichen Zustand können unerwünschte Deformationen und Beschädigungen der Innenfläche des spritzgegossenen Hohlkörpers bei dessen Aufweiten während des Zwangsentformens entstehen. Dies wird dadurch vermieden, dass auch der freigestellte Bereich um die jeweilige Durchgangsöffnung in der Umfangswandung herum einen Entformungswinkel aufweist.

Vorteilhaft ist der jeweilige freigestellte Bereich nach Art einer Ausnehmung in die Umfangswandung eingeformt, wobei die Durchgangsöffnung, die von diesem umgeben wird, innerhalb des freigestellten Bereichs liegt. Aufgrund des von der den freigestellten Bereich umgebenden Fläche der Umfangswandung abweichenden Neigungswinkels der Umfangswandung im freigestellten Bereich weist eine solche Ausnehmung keine gleichmäßige Tiefe auf, sondern einen Bereich mit einer maximalen Tiefe und einen Bereich mit einer minimalen Tiefe von Null. Der freigestellte Bereich geht somit von seinem ersten Ende mit maximaler Tiefe, insbesondere kontinuierlich, in den Neigungswinkel der umgebenden Umfangswandung an seinem gegenüberliegenden zweiten Ende über. Am ersten Ende weist die Ausnehmung des freigestellten Bereichs somit ihre maximale Tiefe auf, am zweiten Ende ihre minimale Tiefe insbesondere von Null an der Stelle, an der sie in die Fläche der umgebenden Umgebungswandung übergegangen ist.

Der in die Umfangswandung eingeformt freigestellte Bereich kann beispielsweise in dem am tiefsten in die Umfangswandung eingeformten Abschnitt, also im Abschnitt mit maximaler Tiefe, eine Tiefe von 0,05 mm bis 0,5 mm aufweisen, insbesondere eine Tiefe von 0,1 mm, vorteilhaft eine Tiefe von 0,2 mm und weiter vorteilhaft eine Tiefe von 0,3 mm. Die jeweilige Wahl der Tiefe im Bereich des Abschnitts mit maximaler Tiefe am ersten Ende des in die Umfangswandung eingeformten freigestellten Bereichs kann hierbei insbesondere von den Abmessungen des freigestellten Bereichs und somit auch der jeweiligen Durchgangsöffnung, die von diesem umgeben wird, und auch des Neigungswinkels der Umfangswandung in dem jeweiligen freigestellten Bereich abhängig gemacht werden.

Die Umfangswandung des spritzgegossenen Hohlkörpers weist weiter vorteilhaft im freigestellten Bereich einen geringeren Neigungswinkel auf als in dem außerhalb von diesem liegenden Bereich der Umfangswandung, gemessen gegenüber der Senkrechten, wobei unter der Senkrechten, wie vorstehend bereits erläutert, die Hochachse des spritzgegossenen Hohlkörpers sowie alle parallelen Achsen zu dieser verstanden wird/werden. Insbesondere kann die Umfangswandung des spritzgegossenen Hohlkörpers im freigestellten Bereich einen Neigungswinkel von 0 ° bis 2,5 ° zur Senkrechten aufweisen, bevorzugt einen Neigungswinkel von 1,5 ° bis 2 ° zur Senkrechten. Dementsprechend kann der Neigungswinkel der Umfangswandung des spritzgegossenen Hohlkörpers im freigestellten Bereich insbesondere auch 0 ° zur Senkrechten betragen, somit in Richtung der Senkrechten verlaufen, so dass die Umfangswandung in diesem freigestellten Bereich zylindrisch ausgebildet ist, während sie außerhalb von diesem einen Entformungswinkel ungleich Null zur Senkrechten aufweist. Der freigestellte Bereich der Umfangswandung des spritzgegossenen Hohlkörpers weist insbesondere in dem Bereich die größte Tiefe auf, in dem die konisch zulaufende Form der Umfangswandung, bezogen auf den Bereich der Anordnung des freigestellten Bereichs, ihren geringsten Innendurchmesser bzw. ihre geringste lichte Weite aufweist.

Der jeweilige freigestellte Bereich umgibt, wie bereits erwähnt, die jeweilige Durchgangsöffnung ähnlich einem Passepartout. Er kann dabei an seiner schmalsten Stelle eine Breite von zumindest 0,5 mm, gemessen zwischen der Durchgangsöffnung und dem dazu in radialer Richtung benachbarten distalen Rand des freigestellten Bereichs, aufweisen, insbesondere eine Bereite von 0,5 mm bis 3 mm. Die Breite des freigestellten Bereichs kann somit sehr gering sein, da der freigestellte Bereich lediglich dazu dient, eine Verrundung zur umgebenden Umfangswandungsfläche um die jeweilige Durchgangsöffnung in der Umfangswandung des spritzgegossenen Hohlkörpers herum vorzusehen, um eine Gratbildung im Übergangsbereich vom jeweiligen freigestellten Bereich zu der diesen umgebenden Innenseite der Umfangswandung des spritzgegossenen Hohlkörpers beim Entformen des spritzgegossenen Hohlkörpers zu vermeiden. Ein nach dem Entformen des spritzgegossenen Hohlkörpers aus einem Spritzgusswerkzeug bzw. einer Vorrichtung zum Herstellen des spritzgegossenen Hohlkörpers verbleibender Trenngrat im Bereich einer jeweiligen Durchgangsöffnung in der Umfangswandung des spritzgegossenen Hohlkörpers ist aufgrund der Freistellung bzw. des jeweiligen freigestellten Bereichs unschädlich.

Der freigestellte Bereich ist insbesondere in seinem am tiefsten in die Umfangswandung eingeformten Abschnitt mit einem gekrümmten und/oder angefasten Randbereich und/oder einem tangentenstetigen Übergang in die Umfangswandung versehen. Der Übergang von der Fläche der Umfangswandung auf deren Innenseite zu der Fläche des freigestellten Bereichs ist somit vorteilhaft gerundet und/oder angefast und/oder tangentenstetig ausgebildet. Hierdurch wird das Auftreten von Graten im Übergangsbereich vom jeweiligen freigestellten Bereich zu der diesen umgebenden Innenseite der Umfangswandung des spritzgegossenen Hohlkörpers beim Entformen in diesem Bereich sicher vermieden und dementsprechend auch Beschädigungen von sich dort in z.B. einem verstellbaren Fluidverteiler anlegenden Dichtelementen. An einer Kante zwischen der jeweiligen Durchgangsöffnung und dem jeweiligen freigestellten Bereich kann grundsätzlich auch weiterhin ein Grat entstehen, der aufgrund des freigestellten Bereichs jedoch nicht mehr zu Beschädigungen an Dichtelementen führt. Es wird somit ein krümmungs- oder tangentenstetiger Übergang zwischen der Innenfläche der Umfangswandung, die den freigestellten Bereich umgibt, und dem jeweiligen freigestellten Bereich geschaffen. Der Krümmungsradius kann hierbei beispielsweise zumindest R0,05 betragen, bevorzugt R0,05 bis R5,0 betragen. Die Breite des verrundeten und/oder angefasten und/oder tangentenstetigen Übergangs zum freigestellten Bereich kann abhängig gemacht werden von den Abmessungen des spritzgegossenen Hohlkörpers bzw. von den Abmessungen der jeweiligen Durchgangsöffnung in der Umfangswandung des spritzgegossenen Hohlkörpers.

Die Fläche des freigestellten Bereichs mit der von diesem umgebenen Durchgangsöffnung kann in der Draufsicht auf diese beispielsweise die Formgebung eines Kegelschnitts und/oder eines Trapezes mit verrundeten Ecken aufweisen. Ferner kann dieser Bereich zumindest teilweise die Formgebung einer Parabel und/oder eines Paraboloids, einer Hyperbel und/oder eines Hyperboloids und/oder eines Halbkreises aufweisen. In jedem der Fälle ist der freigestellte Bereich mit verrundeten Ecken bzw. verrundeten Kanten versehen, um eine Gratbildung beim Entformen und somit in der späteren Verwendung des spritzgegossenen Hohlkörpers beispielsweise in einem verstellbaren Fluidverteiler, wie einem Rotationsventil, eine Beschädigung von dort aufliegenden oder von sich dort vorbei bewegenden weichen Elementen, wie Dichtelementen, möglichst zu vermeiden. Der freigestellte Bereich kann somit unterschiedlichste Formgebungen aufweisen.

Vorteilhaft kann der spritzgegossene Hohlkörper ein Gehäuse oder zumindest ein Teil eines Gehäuses eines verstellbaren Fluidverbinders, insbesondere eines Rotationsventils, sein. In diesem Gehäuse eines solchen verstellbaren Fluidverteilers, insbesondere Rotationsventils, kann zumindest ein Ventilkörper angeordnet sein bzw. werden, der innerhalb des Gehäuses drehbar und/oder verschiebbar ist. Der verstellbare Teil des Fluidverteilers, insbesondere in Form eines Rotationsventils, ist somit der zumindest eine Ventilkörper. Auf der Außenseite des Gehäuses bzw. des spritzgegossenen Hohlkörpers können Anschlussstutzen vorgesehen sein, die entweder direkt mit angeformt oder in die vorgesehenen Durchgangsöffnungen eingefügt und dort befestigt sind. An die Anschlussstutzen können Medienleitungen angeschlossen werden, über die Medium in den verstellbaren Fluidverteiler hinein und aus diesem heraus geleitet werden kann. Über den Ventilkörper erfolgt die Verteilung des Mediums in dem Fluidverteiler, so dass das durch ein oder mehrere Anschlussstutzen einströmende Medium durch entsprechende Positionierung bzw. entsprechendes Drehen und/oder Verschieben des Ventilkörpers durch ein oder mehrere Anschlussstutzen wieder aus dem Fluidverteiler herausströmen kann. Hierdurch lassen sich beispielsweise Kühlmittelströme eines Thermomanagementsystems steuern.

Ein solcher Ventilkörper kann außenseitig mit ein oder mehreren Dichtelementen versehen sein, die zum Abdichten auf der Innenseite der Umfangswandung des als Gehäuse verwendeten spritzgegossenen Hohlkörpers anliegen. Hierbei umgeben sie vorteilhaft die jeweiligen Durchgangsöffnungen in der Umfangswandung des spritzgegossenen Hohlkörpers bzw. Gehäuses des Fluidverteilers, insbesondere Rotationsventils. Ein solches Dichtelement kann dabei umlaufend um den Ventilkörper herum und in Längsrichtung von diesem angeordnet sein und somit einen ungewollten Austritt von Medium zwischen Ventilkörper und Gehäuse des verstellbaren Fluidverteilers und ein ungewolltes Überströmen von Medium zwischen den Durchgangsöffnungen sicher vermeiden. Gerade im Bereich der Anlage des zumindest einen Dichtelements an der Innenseite des Gehäuses erweist das Vorsehen eines jeweiligen freigestellten Bereichs um eine jeweilige Durchgangsöffnung bzw. den Durchgang in einen entsprechenden Anschlussstutzen herum, der auf der Außenseite der Umfangswandung des spritzgegossenen Hohlkörpers bzw. Gehäuses aus diesem herausragt, als vorteilhaft. Ein Beschädigen des oder der jeweiligen Dichtelemente des sich innerhalb des Gehäuses bewegenden Ventilkörpers kann durch den jeweiligen freigestellten Bereich, der die jeweilige Durchgangsöffnung in der Umfangswandung des spitzgegossenen Hohlkörpers umgibt, sicher vermieden werden. Trenngrate beim Entformen entstehen in dem Übergangsbereich von der Umfangswandung außerhalb des jeweiligen freigestellten Bereichs zu diesem nicht mehr, vielmehr ist der Übergangsbereich gerundet und/oder angefast, so dass hier keine Beschädigung der Dichtelemente mehr auftritt.

Um einen freigestellten Bereich zu fertigen, weist der Spritzgusskern, der zum Formgeben der Innenseite des spritzgegossenen Hohlkörpers vorgesehen ist, zumindest einen auskragenden Bereich auf, der der Formgebung des zu formenden freigestellten Bereichs entspricht. Es kann zum Formgeben eines freigestellten Bereichs ein auskragender Bereich an dem Spritzgusskern vorgesehen sein oder mehrere auskragende Bereiche, die zusammen den freigestellten Bereich bilden. Der oder die auskragende(n) Bereich(e) weist/weisen zumindest einen von dem Entformungswinkel in der übrigen Außenfläche des Spritzgusskerns abweichenden Neigungs- bzw. Entformungswinkel auf. Innerhalb dieses zumindest einen auskragenden Bereichs wird auch die Durchgangsöffnung in der Umfangswandung ausgebildet, beispielsweise durch Schieber oder durch nachfolgendes Bohren. Die Durchgangsöffnung liegt innerhalb der Fläche des auskragenden Bereichs. Durch diesen zumindest einen auskragenden Bereich wird somit um die jeweilige Durchgangsöffnung in der Umfangswandung des spitzgegossenen Hohlkörpers herum der freigestellte Bereich gebildet. Der Übergangsbereich von der den auskragenden Bereich umgebenden Außenfläche des Spitzgusskerns zu dem auskragenden Bereich kann durch Vorsehen entsprechender Verrundungen und/oder Fasen im Übergangsbereich zu dem auskragenden Bereich des Spitzgusskerns vorgesehen werden. Die Verrundungen und/oder Fasen bilden an dem spritzgegossenen Hohlkörper die gewünschten gekrümmten und/oder angefasten und/oder tangentenstetigen Übergänge. Hierdurch ist es möglich, den Verbleib von Trenngraten in diesen Übergangsbereichen zu vermeiden.

Der spitzgegossene Hohlkörper kann, wie vorstehend bereits erwähnt, beispielsweise als Gehäuse eines verstellbaren Fluidverteilers, insbesondere Rotationsventils, das Teil eines Thermomanagementsystems eines Fahrzeugs sein kann, verwendet werden. Solche Thermomanagementsysteme können in Fahrzeugen mit Verbrennungsmotoren, Brennstoffzellen-Fahrzeugen, batteriebetriebenen Fahrzeugen und Plug-In-Hybrid-Fahrzeugen verwendet werden.

Durch das Vorsehen freigestellter Bereiche, die Durchgangsöffnungen in einer Umfangswandung des spitzgegossenen Hohlkörpers umgeben, kann auch der Aufbau von Spitzgusswerkzeugen bzw. Vorrichtungen zum Spritzgießen und somit Herstellen solcher spritzgegossener Hohlkörper kostengünstiger gestaltet werden, da bereits in dem Spritzgusskern die entsprechende Formgebung für den freigestellten Bereich vorgeformt wird, somit keine weiteren Maßnahmen zum Erzeugen des jeweiligen freigestellten Bereichs erforderlich sind. Gerade ohne Vorsehen eines Zwangsentformens kann ein sehr gutes Entformen des spitzgegossenen Hohlkörpers nach dessen Fertigung erfolgen. Da Trenngrate gerade im Übergangsbereich zu den Durchgangsöffnungen in der Umfangswandung des spitzgegossenen Hohlkörpers vermieden werden, kann die Lebensdauer von verstellbaren Fluidverteilern unter Verwendung solcher spritzgegossener Hohlkörper deutlich erhöht werden gegenüber den Lösungen des Standes der Technik, da Dichtelemente und andere weiche Elemente sowie Ventilkörper, die ansonsten alle durch solche Trenngrate beim Überstreichen beschädigt würden, vermieden werden können. Somit reduziert sich auch der Wartungsaufwand für derartige verstellbare Fluidverteiler.

Alle für das Entformen sinnvollen Flächen werden ebenso wie der zumindest eine freigestellte Bereich um die jeweilige Durchgangsöffnung in der Umfangswandung des spitzgegossenen Hohlkörpers herum bereits in dem Spritzgusskern bzw. dessen Geometrie abgebildet, so dass auch keine weiteren Nacharbeiten an dem spitzgegossenen Hohlkörper mehr erforderlich sind. Auch hierdurch können Kosten gegenüber den Lösungen des Standes der Technik eingespart werden, die ansonsten für das Entfernen der unerwünschten Trenngrate aufgewendet werden müssten.

Zur näheren Erläuterung der Erfindung werden im Folgenden Ausführungsbeispiele von dieser näher anhand der Zeichnungen beschrieben. Diese zeigen in:
- Figur 1: eine Seitenansicht eines erfindungsgemäßen spitzgegossenen Hohlkörpers,
- Figur 2: eine Längsschnittansicht durch den spitzgegossenen Hohlkörper gemäß Figur 1 entlang der Linie A-A, mit Sicht auf drei erfindungsgemäße freigestellte Bereiche um drei Durchgangsöffnungen in der Umfangswandung des spritzgegossenen Hohlkörpers herum,
- Figur 3: eine perspektivische Draufsicht auf den spitzgegossenen Hohlkörper gemäß Figur 1,
- Figur 4: eine Detailschnittansicht des spitzgegossenen Hohlkörpers gemäß Figur 2 im durch Z gekennzeichneten vergrößerten Detail zweier benachbarter freigestellter Bereiche um zwei Durchgangsöffnung in der Umfangswandung des spritzgegossenen Hohlkörpers herum,
- Figur 5: eine perspektivische Ansicht eines erfindungsgemäßen Rotationsventils, enthaltend den spritzgegossenen Hohlkörper gemäß Figur 1 als Gehäuse und einen Ventilkörper in dessen Inneren,
- Figur 6: eine Seitenansicht des Rotationsventils gemäß Figur 5,
- Figur 7: eine Längsschnittansicht des Rotationsventils gemäß Figur 6 entlang der Linie B-B,
- Figur 8a: eine Detailschnittansicht des Rotationsventils im Bereich F aus Figur 7,
- Figur 8b: eine Detailschnittansicht des Rotationsventils im Bereich E aus Figur 7,
- Figur 9: eine um 45 ° gegenüber der in Figur 6 gezeigten Seitenansicht gedrehte Seitenansicht des Rotationsventils gemäß Figur 5,
- Figur 10: eine Längsschnittansicht durch das Rotationsventil gemäß Figur 9 entlang der Linie C-C,
- Figur 11a: eine Detailschnittansicht des Rotationsventils im Bereich H aus Figur 10,
- Figur 11b: eine Detailschnittansicht des Rotationsventils im Bereich G aus Figur 10,
- Figur 12a: eine perspektivische Ansicht eines Dichtelements für den Ventilkörper des Rotationsventils gemäß Figur 5,
- Figur 12b: eine perspektivische Ansicht des Dichtelements gemäß Figur 12a, wobei das Dichtelement entsprechend der Anordnung am Ventilkörper gekrümmt ist,
- Figur 13: eine perspektivische Ansicht des Ventilkörpers des Rotationsventils gemäß Figur 5, versehen mit dem Dichtelement gemäß Figur 12a und Figur 12b,
- Figur 14: eine erste Seitenansicht des Ventilelements gemäß Figur 13,
- Figur 15: eine Längsschnittansicht des Ventilelements gemäß Figur 13 entlang der Linie D-D,
- Figur 16: eine Querschnittansicht des Ventilelements gemäß Figur 13 entlang der Linie K-K,
- Figur 17: eine gegenüber der ersten Seitenansicht gemäß Figur 14 um 90 ° gedrehte zweite Seitenansicht des Ventilkörpers gemäß Figur 13,
- Figur 18: eine gegenüber der ersten Seitenansicht gemäß Figur 14 um 180 ° gedrehte dritte Seitenansicht des Ventilkörpers gemäß Figur 13, und
- Figur 19: eine Draufsicht auf den Ventilkörper gemäß Figur 13.

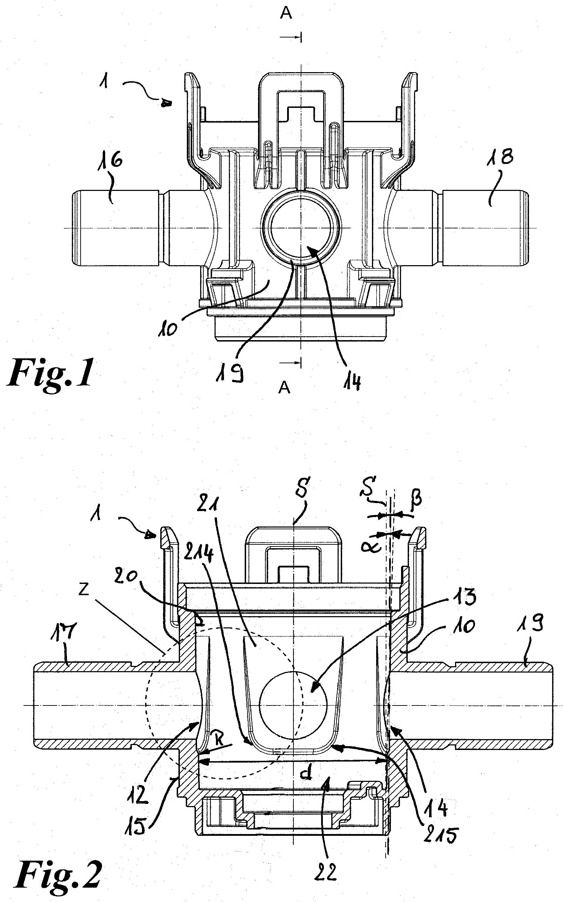

In den Figuren 1 bis 3 ist ein spritzgegossener Hohlkörper 1 gezeigt. Dieser weist eine Umfangswandung 10 mit vier darin angeordneten Durchgangsöffnungen 11, 12, 13, 14 auf. Auf der Außenseite 15 der umlaufenden Umfangswandung 10 des spritzgegossenen Hohlkörpers 1 sind, jeweils in Überdeckung der jeweiligen Durchgangsöffnung 11, 12, 13, 14, vier Anschlussstutzen 16, 17, 18, 19 angeordnet. An die Anschlussstutzen 16, 17, 18, 19 können Medienleitungen angeschlossen werden, was jedoch in den Figuren nicht gezeigt ist.

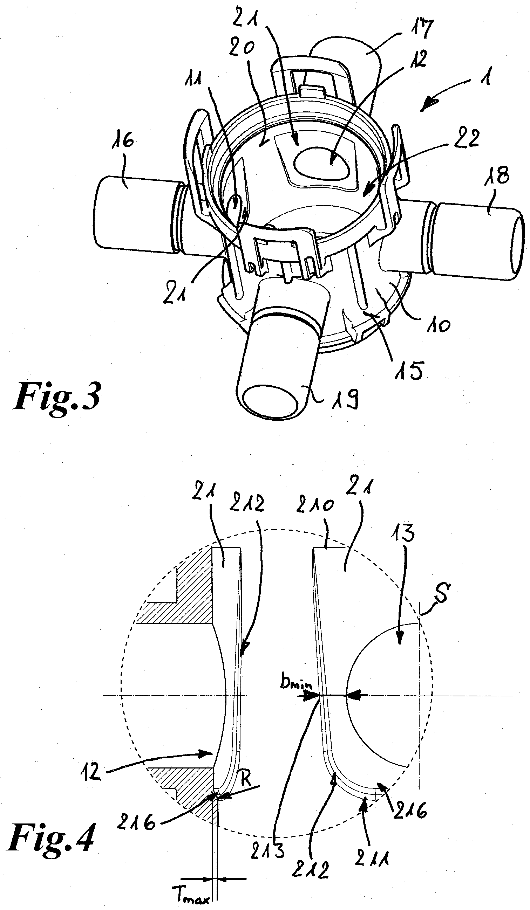

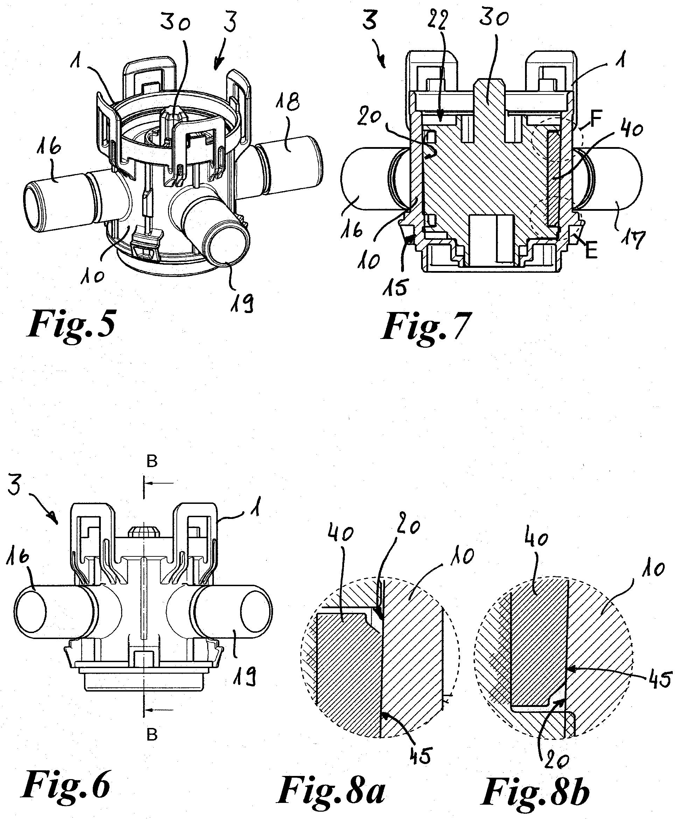

Wie insbesondere den Figuren 2 und 3 zu entnehmen ist, ist auf der Innenseite 20 des spritzgegossenen Hohlkörpers 1 passepartoutsartig um jede der vier Durchgangsöffnungen 11, 12, 13, 14 herum ein jeweiliger freigestellter Bereich 21 angeordnet. Die freigestellten Bereiche 21 um die Durchgangsöffnungen 11, 12, 13, 14 herum dienen zum Vermeiden einer Beschädigung von dort anliegenden oder in Kontakt tretenden Oberflächen, insbesondere eines Dichtelements, aufgrund von Gratbildung beim Entformen eines solchen spritzgegossenen Hohlkörpers 1, also beim Entfernen von Spritzgusskernen, die während des Spritzgießens des Hohlkörpers in einer Spritzgussaußenform angeordnet sind und nach dem Spritzgussvorgang aus dieser wieder entfernt werden. Die freigestellten Bereiche 21 ermöglichen es, dass optimalerweise keine Trenngrate bzw. Grate auf der Innenseite 20 des spritzgegossenen Hohlkörpers 1 verbleiben und Trenngrate im Bereich der Durchgangsöffnungen 11, 12, 13, 14 keine negativen Auswirkungen durch Beschädigung von mit diesen in Kontakt kommenden Oberflächen von Elementen, wie Dichtelementen und anderen Elementen, haben können, da mit diesen keine solchen Oberflächen mehr in Kontakt kommen, da sie durch die freigestellten Bereiche 21 in Richtung weg von diesen Oberflächen versetzt liegen. Dies wird nachstehend zu den Figuren 7, 8a, 8b, 10, 11a, 11b noch näher erläutert.

Wie Figur 2 weiter entnommen werden kann, ist der spitzgegossene Hohlkörper 1 leicht konisch zulaufend ausgebildet, seine Umfangswandung 10 weist einen Entformungswinkel β zur Senkrechten S auf. Die Senkrechte S erstreckt sich in Richtung der Hochachse des spritzgegossenen Hohlkörpers 1 bzw. parallel zu dieser. Wie Figur 2 und der vergrößerten Detailansicht in Figur 4 des Details Z aus Figur 2 weiter entnommen werden kann, weisen die freigestellten Bereiche 21 einen anderen Neigungs- bzw. Entformungswinkel α auf als die übrige Innenseite 20 der Umfangswandung 10 des spritzgegossenen Hohlkörpers 1, die den Entformungswinkel β aufweist, wobei α ≠ β ist. Der Entformungswinkel β und der Neigungs-/Entformungswinkel α sind jeweils gegenüber der Senkrechten S gemessen, die in den Figuren 2 und 4 ebenfalls angedeutet ist. Wie insbesondere Figur 2 entnommen werden kann, ist der Neigungs-/Entformungswinkel α des freigestellten Bereichs 21 kleiner als der Entformungswinkel β der übrigen Innenseite 20 der Umfangswandung 10 des spritzgegossenen Hohlkörpers 1, somit a < β. Insbesondere kann der Neigungs-/ Entformungswinkel a 0 ° bis 2,5 ° zur Senkrechten S betragen, beispielsweise 1,5 ° bis 2 °. Der Neigungs-/ Entformungswinkel α kann sich somit auch in Richtung der Senkrechten S erstrecken, somit 0 ° betragen. Dies ist bei dem in Figur 2 gezeigten Beispiel in etwa der Fall. Der Entformungswinkel β der Umfangswandung 10 auf deren Innenseite 20 beträgt bei dem spritzgegossenen Hohlkörper 1 üblicherweise 2 ° bis 3 ° zur Senkrechten S.

Wie insbesondere Figur 4 besonders gut entnommen werden kann, laufen die Fläche des freigestellten Bereichs 21 mit ihrem Neigungs-/Entformungswinkel α und die übrige Fläche auf der Innenseite 20 der Umfangswandung 10 des spritzgegossenen Hohlkörpers 1 mit dem Entformungswinkel β aufeinander zu bzw. gehen ineinander über, nämlich an dem mit dem in der Zeichnung etwa waagerecht verlaufenen Strich gekennzeichneten ersten Ende 210 des freigestellten Bereichs 21. An dem ersten Ende 210 des freigestellten Bereichs 21 weist dieser seine minimale Tiefe auf, geht in die umliegende Umfangswandung 10 über, während er am gegenüberliegenden zweiten Ende 211 seine maximale Tiefe Tₘₐₓ aufweist, die in Figur 4 ebenfalls angedeutet. Dies ist der tiefste Abschnitt 216 des freigestellten Bereichs 21. An dieser Stelle weist der konisch zulaufende spritzgegossene Hohlkörper 1 einen geringeren Innendurchmesser d auf als im Bereich des ersten Endes 210 des freigestellten Bereichs 21 (siehe Figur 2). Der freigestellte Bereich 21 ist erkennbar als Ausnehmung ausgebildet, die den mit dem Neigungs-/Entformungswinkel α versehenen Boden, der von der Durchgangsöffnung 11 bzw. 12 bzw. 13 bzw. 14 durchdrungen oder unterbrochen wird, aufweist. Auch dies kann besonders gut den Figuren 2 und 4 entnommen werden.

Der Übergangsbereich 212 vom jeweiligen freigestellten Bereich 21 zu der diesen umgebenden Innenseite 20 der Umfangswandung 10 des spritzgegossenen Hohlkörpers 1 ist gerundet, angefast oder tangentenstetig ausgebildet, wie in den Figuren 2 und 4 ebenfalls angedeutet. Hierdurch kann eine Gratbildung wirksam vermieden werden, da bereits bei der Formgebung des freigestellten Bereich 21 durch das entsprechende Spritzgusswerkzeug bzw. den Spritzgusskern diese entsprechenden Verrundungen bzw. Fasen im Übergangsbereich 212 ausgebildet werden können. Auch beim Entformen des spritzgegossenen Hohlkörpers 1 entstehen dadurch keine Trenngrate in diesem Bereich.

Der jeweilige freigestellte Bereich 21 weist, gemessen zwischen der Durchgangsöffnung 11 bzw. 12 bzw. 13 bzw. 14 und dem jeweils benachbarten distalen Rand 213 des freigestellten Bereichs 21, an seiner schmalsten Stelle beispielsweise von bₘᵢₙ von zumindest 0,5mm, insbesondere eine Breite von bₘᵢₙ = 0,5 bis 3mm auf.

In dem Übergangsbereich 212 kann der Krümmungsradius R beispielsweise zumindest R0,05, insbesondere R0,05 bis R5,0 betragen. Ein solcher Krümmungsradius ist ausreichend, um die Bildung von Graten zu vermeiden.

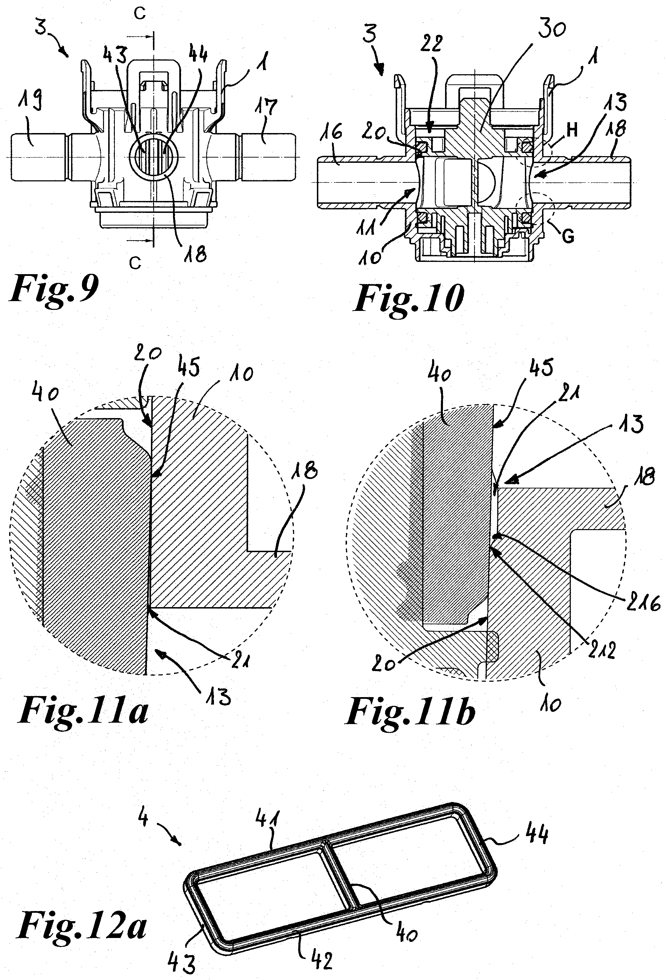

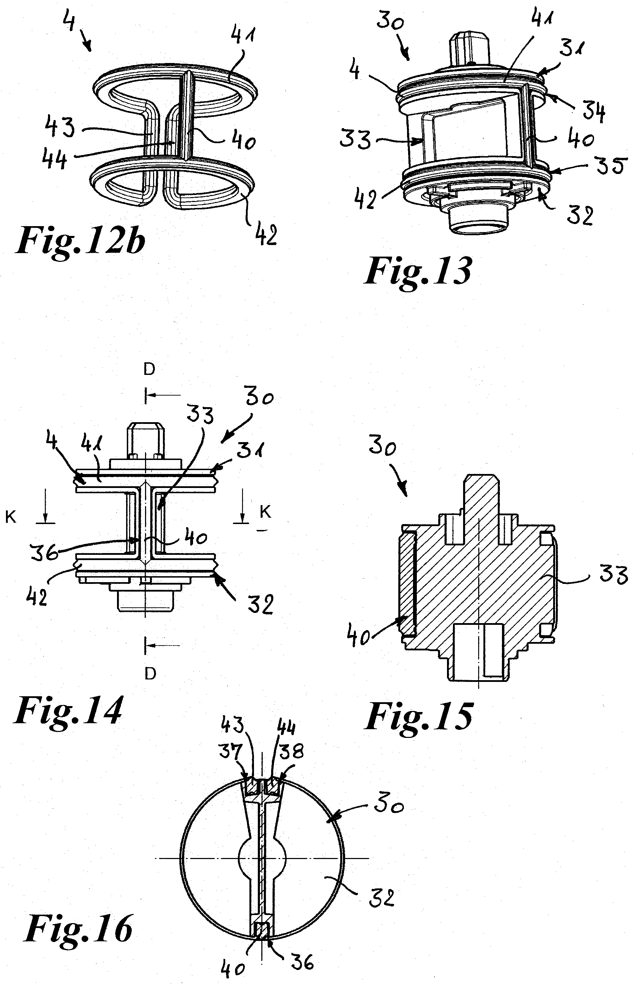

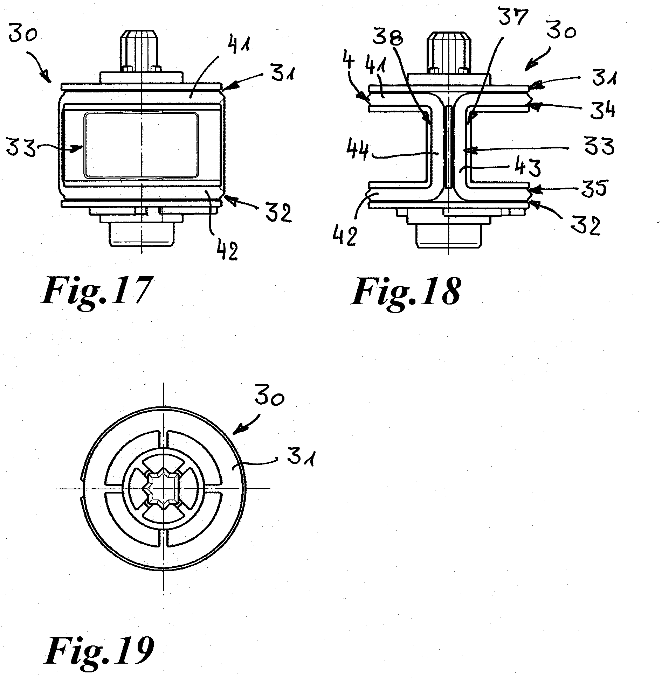

In den Figuren 5 bis 7, 9\ und 10 ist ein aus dem spritzgegossenen Hohlkörper 1 gebildetes Rotationsventil 3 gezeigt. Dieses umfasst außer dem spritzgegossenen Hohlkörper 1, der hier das Gehäuse des Rotationsventils 3 bildet, einen Ventilkörper 30 auf, der im Inneren 22 des spritzgegossenen Hohlkörpers 1 angeordnet ist, wie insbesondere Figur 7 und Figur 10 besonders gut entnommen werden kann. Der in dem spritzgegossenen Hohlkörper 1 angeordnete Ventilkörper 30 ist ebenfalls in den Figuren 13 bis 19 gezeigt. Der Ventilkörper 30 weist zwei voneinander beanstandete, in der Draufsicht etwa kreisförmige Wandungsabschnitte 31, 32 auf. Die beiden Wandungsabschnitte 31, 32 sind durch einen im Wesentlichen scheibenförmigen Wandungsteil 33 miteinander verbunden, der sich zwischen den beiden Wandungselementen 31, 32 etwa senkrecht zu diesen erstreckt. Der Wandungsteil 33 unterteilt somit den Ventilkörper 30 in zwei Kammern. Wie insbesondere Figur 15 entnommen werden kann, ist der Ventilkörper 30 einteilig ausgebildet, so dass die Wandungsabschnitte 31, 32 einteilig mit dem Wandungsteil 33 sind.

Sowohl die Wandungsabschnitte 31, 32 als auch der Wandlungsteil 33 weisen jeweils außenseitige Nuten 34, 35, 36, 37, 38 auf, in die ein Dichtelement 4 eingelegt wird bzw. ist. Das Dichtelement 4 ist in den Figuren 12a und 12b gezeigt. Wie insbesondere Figur 12a entnommen werden kann, ist das Dichtelement 4 als Rahmen mit zwei beabstandeten Längsabschnitten 41, 42, zwei diese endseitig verbindenden Verbindungsstegen 43, 44 und einem etwa mittigen Zwischensteg 40 ausgebildet. Der Zwischensteg 40 wird nach dem Krümmen des Dichtelementes 4, wie dies in Figur 12b gezeigt ist, in die Nut 36 des Wandungsteils 33 eingelegt, die beiden die Längsabschnitte 41, 42 miteinander verbindenden Verbindungsstege 43, 44 in die beiden Nuten 37, 38 des Wandungsteils 33 und die beiden Längsabschnitte 41, 42 in die beiden umlaufenden Nuten 34, 35 der beiden Wandungsabschnitte 31, 32. Dies kann insbesondere den Figuren 13, 14, 16, 18 entnommen werden.

In den Figuren 7 und 10, die jeweils eine Schnittansicht durch das Rotationsventil 3 zeigen, sind die Bereiche, in denen das Dichtelement 4 mit der jeweiligen Innenseite 20 des als Gehäuse des Rotationsventils 3 dienenden spritzgegossenen Hohlkörpers 1 in Kontakt kommt, durch die Buchstaben E, F, H und G gekennzeichnet. Eine jeweilige Vergrößerung dieser Bereiche finden sich in den Figuren 8a (Bereich F), Figur 8b (Bereich E), Figur 11a (Bereich H) und Figur 11b (Bereich G). Wie den Figuren 8a und 8b zu entnehmen ist, liegt der in der Nut 36 des Wandungsteils 33 angeordnete Zwischensteg 40 des Dichtelements 4 direkt an der Innenseite 20 der spritzgegossenen Hohlkörpers 1 an. Da in dem in Figur 8a und 8b bzw. Figur 7 gezeigten Bereich keiner der Anschlussstutzen 16 bis 19 angeordnet ist, ist eine solche ebene Anlage des Dichtelementes 4 an der Innenseite 20 der Umfangswandung 10 des spritzgegossenen Hohlkörpers 1 problemlos möglich.

Die Figuren 11a und 11b verdeutlichen den Vorteil des freigestellten Bereichs 21. Wie insbesondere Figur 11b zu entnehmen ist, liegt das Dichtelement 4, wenn es sich mit seinem Zwischensteg 40 oder den beiden Verbindungsstegen 43, 44 beispielsweise an dem Anschlussstutzen 18 bzw. dessen Durchgangsöffnung 13 vorbei bewegt, außenseitig lediglich an der Innenseite 20 der Umfangswandung 10 außerhalb des freigestellten Bereichs 21 an. Daher können ggf. im Bereich der Durchgangsöffnung 13 beim Entformen oder deren Bohren verbliebene Trenngrate durch das Verlagern der Durchgangsöffnung 13 weiter in die Umfangswandung 10 hinein durch das Dichtelement 4, hier den Zwischensteg 40, nicht berührt werden. Das Dichtelement 4 streicht lediglich an dem Übergangsbereich 212 vom freigestellten Bereich 21 zur diesen umgebenden Umfangswandung 10 auf deren Innenseite 20 vorbei. Die Durchgangsöffnung 13 ist somit durch Vorsehen des freigestellten Bereichs 21 von dem Dichtelement 4, bzw. hier von dessen Zwischensteg 40, in Richtung des Anschlussstutzens 18 nach außen weg bzw. in die Umfangswandung 10 hinein versetzt. Dies ist für den Bereich G in Figur 11b zu sehen, wo der freigestellte Bereich 21 die größte Tiefe Tₘₐₓ aufweist, sich somit der tiefste Abschnitt 216 des freigestellten Bereichs 21 befindet. In dem Bereich H in Figur 10, der vergrößert in Figur 11a gezeigt ist, ist ferner erkennbar, dass auch dort die Außenseite 45 des Dichtelements 4 beabstandet zu der Durchgangsöffnung 13 ist. Selbst wenn im Bereich der Durchgangsöffnung 13 somit ein Trenngrat nach dem Entformen des spritzgegossenen Hohlkörpers 1 aus einem Spritzgusswerkzeug bzw. einer Vorrichtung zum Herstellen des spritzgegossenen Hohlkörpers 1 verbleibt, kommt dieser nicht mit der Außenseite 45 des Dichtelementes 4 in Kontakt. Eine Beschädigung des Dichtelementes 4 kann somit bei dessen Rotieren zusammen mit dem Ventilkörper 30 innerhalb des spritzgegossenen Hohlkörpers 1 in Ausbildung als Gehäuse des Rotationsventils 3 sicher vermieden werden.

Wie insbesondere Figur 2 besonders gut entnommen werden kann, weist der freigestellte Bereich 21 in dem mit dem verrundeten bzw. gekrümmten Übergangsbereich 212 versehenen Umfangsbereich jeweils verrundete Ecken 214, 215 auf. Der freigestellte Bereich 21, der nach Art eines Passepartouts die jeweilige Durchgangsöffnung 11, 12, 13, 14 in sich aufnimmt bzw. umgibt, kann in der Draufsicht z.B. die Form eines Trapezes mit verrundeten Ecken, ähnlich wie in Figur 2 gezeigt, die Formgebung eines Kegelschnitts, einer Parabel, eines Paraboloids, einer Hyperbel oder eines Hyperboloids oder z.B. eines Halbkreises aufweisen. Die jeweilige Wahl der Formgebung des freigestellten Bereichs 21 kann von dem jeweiligen Verwendungsfall bzw. den Abmessungen des spritzgegossenen Hohlkörpers und/oder der Durchgangsöffnungen in dessen Umfangswandung 10 sowie der Formgebung der Durchgangsöffnungen abhängig gemacht werden.

Außer bei einem Rotationsventil kann der spritzgegossene Hohlkörper auch bei einem anderen verstellbaren Fluidverteiler beispielsweise als Gehäuse verwendet werden. Eine Vorrichtung, mittels derer der spritzgegossene Hohlkörper geformt wird, somit eine Vorrichtung zum Spritzgießen des Hohlkörpers, weist insbesondere einen Spritzgusskern auf, der entsprechend der gewünschten Formgebung der freigestellten Bereiche 21 geformte auskragende Elemente bzw. auskragende Bereiche aufweist.

Die spritzgegossenen Hohlkörper 1 in Anordnung insbesondere in einem verstellbaren Fluidverteiler, wie dem Rotationsventil 3, können in einem Thermomanagementsystem eines Fahrzeugs Anwendung finden, wie eines Fahrzeugs mit Verbrennungsmotor, eines Brennstoffzellen-Fahrzeugs, eines batteriebetriebenen Fahrzeugs oder eines Plug-In-Hybrid-Fahrzeugs.

Neben den im Vorstehenden beschriebenen und in den Figuren gezeigten Ausführungsvarianten spritzgegossener Hohlkörper, umfassend zumindest eine Umfangswandung mit einer Innenseite und einer Außenseite und mit zumindest einer die Umfangswandung durchdringenden Durchgangsöffnung, wobei die zumindest eine Umfangswandung zumindest auf ihrer Innenseite eine Neigung in einem Entformungswinkel zur Senkrechten aufweist, können noch zahlreiche weitere gebildet werden, insbesondere beliebige Kombinationen der vorstehend genannten Merkmale, wobei jeweils die zumindest eine Durchgangsöffnung von einem freigestellten Bereich umgeben ist, dessen Neigungswinkel von dem der Umfangswandung auf deren Innenseite abweicht, um hierüber die Durchgangsöffnung in die Umfangswandung hinein zu versetzen, somit aus der umgebenden Fläche auf der Innenseite der Umfangswandung des spritzgegossenen Hohlkörpers heraus in Richtung in die Umfangswandung hinein. Die Umfangswandung weist daher im freigestellten Bereich zumeist eine geringere Wandungsstärke auf als in dem übrigen Bereich der Umfangswandung, zumindest in dem tiefsten Bereich des freigestellten Bereichs.

### Bezugszeichenliste

- 1: spritzgegossener Hohlkörper
- 3: Rotationsventil
- 4: Dichtelement
- 10: Umfangswandung
- 11: Durchgangsöffnung
- 12: Durchgangsöffnung
- 13: Durchgangsöffnung
- 14: Durchgangsöffnung
- 15: Außenseite
- 16: Anschlussstutzen
- 17: Anschlussstutzen
- 18: Anschlussstutzen
- 19: Anschlussstutzen
- 20: Innenseite
- 21: freigestellter Bereich
- 22: Inneres
- 30: Ventilkörper
- 31: Wandungsabschnitt
- 32: Wandungsabschnitt
- 33: Wandungsteil
- 34: Nut
- 35: Nut
- 36: Nut
- 37: Nut
- 38: Nut
- 40: Zwischensteg
- 41: Längsabschnitt
- 42: Längsabschnitt
- 43: Verbindungssteg
- 44: Verbindungssteg
- 45: Außenseite von 4
- 210: erstes Ende von 21
- 211: zweites Ende von 21
- 212: Übergangsbereich
- 213: distaler Rand
- 214: verrundete Ecke
- 215: verrundete Ecke
- 216: tiefster Abschnitt von 21
- a: Neigungs-/Entformungswinkel
- β: Entformungswinkel
- Tₘₐₓ: maximale Tiefe von 21
- bₘᵢₙ: Breite
- R: Krümmungsradius
- d: Innendurchmesser
- S: Senkrechte

## Patentansprüche

1. Spritzgegossener Hohlkörper (1), insbesondere rotationssymmetrischer spritzgegossener Hohlkörper, umfassend zumindest eine Umfangswandung (10) mit einer Innenseite (20) und einer Außenseite (15) und mit zumindest einer die Umfangswandung (10) durchdringenden Durchgangsöffnung (11, 12, 13, 14), wobei die zumindest eine Umfangswandung (10) zumindest auf ihrer Innenseite (20) eine Neigung in einem Entformungswinkel (β) zur Senkrechten (S) aufweist,
**dadurch gekennzeichnet, dass**
die zumindest eine Durchgangsöffnung (11, 12, 13, 14) von einem freigestellten Bereich (21) umgeben ist, wobei in dem freigestellten Bereich (21) der Neigungswinkel (α) der Umfangswandung (10) von dem außerhalb des freigestellten Bereichs (21) abweicht zum Vermeiden einer Gratbildung im Übergangsbereich (212) von der Innenseite (20) der Umfangswandung (10) zur zumindest einen Durchgangsöffnung (11, 12, 13, 14) in dieser und zum Vermeiden von durch Gratbildung hervorgerufenen Beschädigungen an mit der Innenseite (20) der Umfangswandung (10) des spritzgegossenen Hohlkörpers (1) in Kontakt tretenden Elementen, wobei der freigestellte Bereich (21) nach Art einer Ausnehmung in die Umfangswandung (10) eingeformt ist.

2. Spritzgegossener Hohlkörper (1) nach Anspruch 1,
**dadurch gekennzeichnet, dass**
die Umfangswandung (10) im freigestellten Bereich (21) einen geringeren Neigungswinkel (α) aufweist als in dem außerhalb von diesem liegenden Bereich auf der Innenseite (20) der Umfangswandung (10), insbesondere die Umfangswandung (10) im freigestellten Bereich (21) einen Neigungswinkel (α) von 0 ° bis 2,5 ° zur Senkrechten (S) aufweist, insbesondere einen Neigungswinkel (α) von 1,5 ° bis 2 ° zur Senkrechten (S).

3. Spritzgegossener Hohlkörper (1) nach einem der vorstehenden Ansprüche, **dadurch gekennzeichnet, dass**
der in die Umfangswandung (10) eingeformte freigestellte Bereich (21) in seinem am tiefsten in die Umfangswandung (10) eingeformten Abschnitt (216) eine Tiefe (Tₘₐₓ) von 0,05 mm bis 0,5 mm aufweist, insbesondere eine Tiefe (Tₘₐₓ) von 0,1 mm, insbesondere eine Tiefe (Tₘₐₓ) von 0,2 mm, insbesondere eine Tiefe (Tₘₐₓ) von 0,3 mm.

4. Spritzgegossener Hohlkörper (1) nach einem der vorstehenden Ansprüche, **dadurch gekennzeichnet, dass**
der freigestellte Bereich (21) an seiner schmalsten Stelle eine Breite (bₘᵢₙ) von zumindest 0,5 mm, gemessen zwischen der Durchgangsöffnung (11, 12, 13, 14) und dem dazu benachbarten distalen Rand (213) des freigestellten Bereichs (21), aufweist, insbesondere eine Breite (bₘᵢₙ) von 0,5 mm bis 3 mm.

5. Spritzgegossener Hohlkörper (1) nach einem der vorstehenden Ansprüche, **dadurch gekennzeichnet, dass**
die Fläche des freigestellten Bereichs (21) mit der von diesem umgebenen Durchgangsöffnung (11, 12, 13, 14) in der Draufsicht die Formgebung eines Kegelschnitts und/oder eines Trapezes mit verrundeten Ecken aufweist, insbesondere zumindest teilweise die Formgebung einer Parabel und/oder eines Paraboloids, einer Hyperbel und/oder eines Hyperboloids und/oder eines Halbkreises.

6. Spritzgegossener Hohlkörper (1) nach einem der vorstehenden Ansprüche, **dadurch gekennzeichnet, dass**
der freigestellte Bereich (21) insbesondere in seinem am tiefsten in die Umfangswandung (10) eingeformten Abschnitt (216) mit einem gekrümmten und/oder angefasten Übergangsbereich (212) und/oder einem tangentenstetigen Übergang in die den freigestellten Bereich (21) umgebende Umfangswandung (10) versehen ist.

7. Spritzgegossener Hohlkörper (1) nach Anspruch 6,
**dadurch gekennzeichnet, dass**
der Krümmungsradius (R) zumindest R0,05 beträgt, insbesondere R0,05 bis R5,0 beträgt.

8. Spritzgegossener Hohlkörper (1) nach einem der vorstehenden Ansprüche, **dadurch gekennzeichnet, dass**
der spritzgegossene Hohlkörper (1) ein Gehäuse oder zumindest ein Teil eines Gehäuses eines verstellbaren Fluidverteilers, insbesondere eines Rotationsventils (3), ist.

9. Verstellbarer Fluidverteiler, insbesondere Rotationsventil (3), mit zumindest einem Gehäuse und zumindest einem Ventilkörper (30) innerhalb des zumindest einen Gehäuses, wobei der zumindest eine Ventilkörper (30) drehbar und/oder verschiebbar innerhalb des Gehäuses angeordnet ist, und wobei das zumindest eine Gehäuse außenseitig mit zumindest einem Anschlussstutzen (16, 17, 18, 19) versehbar oder versehen ist,
**dadurch gekennzeichnet, dass**
das zumindest eine Gehäuse aus einem spritzgegossenen Hohlkörper (1) nach einem der vorstehenden Ansprüche gebildet ist.

10. Vorrichtung zum Herstellen eines mit zumindest einer Umfangswandung (10) und zumindest einer diese durchdringenden Durchgangsöffnung (11, 12, 13, 14) versehenen spritzgegossenen Hohlkörpers (1) nach einem der Ansprüche 1 bis 8, wobei die Vorrichtung zumindest eine Spritzgussaußenform und zumindest einen Spritzgusskern umfasst, wobei der zumindest eine Spritzgusskern und die zumindest eine Spritzgussaußenform zwischen sich einen Hohlraum bilden, in den Kunststoffmaterial zum Ausbilden des spritzgegossenen Hohlkörpers (1) einströmbar ist, wobei der zumindest eine Spritzgusskern konisch zulaufend geformt ist mit einer einem Entformungswinkel entsprechenden Neigung seiner Außenseite zum Unterstützen des Entformens des spritzgegossenen Hohlkörpers (1),
**dadurch gekennzeichnet, dass**
der zumindest eine Spritzgusskern mit zumindest einem auskragenden, einen von dem Entformungswinkel abweichenden Neigungswinkel aufweisenden Bereich zum Ausbilden eines zumindest eine Durchgangsöffnung (11, 12, 13, 14) umgebenden freigestellten Bereichs (21) des spritzgegossenen Hohlkörpers (1) versehen ist.

11. Fahrzeug, insbesondere Fahrzeug mit Verbrennungsmotor, Brennstoffzellen-Fahrzeug, batterieelektrisch betriebenes Fahrzeug, Plug-In-Hybrid-Fahrzeug, umfassend zumindest einen verstellbaren Fluidverteiler in einem Thermomanagementsystem des Fahrzeugs, **dadurch gekennzeichnet, dass**
der zumindest eine verstellbare Fluidverteiler des Thermomanagementsystems einen spritzgegossenen Hohlkörper (1) nach einem der Ansprüche 1 bis 8 enthält.

## Claims

1. Injection-moulded hollow body (1), in particular rotationally symmetrical injection-moulded hollow body, comprising at least one peripheral wall (10) having an inner side (20) and an outer side (15) and having at least one through-opening (11, 12, 13, 14) passing through the peripheral wall (10), wherein the at least one peripheral wall (10) has at least on its inner side (20) an inclination at a demoulding angle (β) relative to the vertical (S),
**characterised in that**
the at least one through-opening (11, 12, 13, 14) is surrounded by an isolated region (21), wherein in the isolated region (21) the angle of inclination (α) of the peripheral wall (10) differs from the angle of inclination outside the isolated region (21) in order to avoid the formation of a burr in the transition region (212) from the inner side (20) of the peripheral wall (10) to the at least one through-opening (11, 12, 13, 14) therein and to avoid damage, caused by the formation of a burr, to elements that come into contact with the inner side (20) of the peripheral wall (10) of the injection-moulded hollow body (1), wherein the isolated region (21) is formed into the peripheral wall (10) in the manner of a recess.

2. Injection-moulded hollow body (1) according to claim 1,
**characterised in that**
the peripheral wall (10) has a smaller angle of inclination (α) in the isolated region (21) than in the region on the inner side (20) of the peripheral wall (10) that is located outside the isolated region, in particular the peripheral wall (10) has in the isolated region (21) an angle of inclination (α) of from 0° to 2.5° relative to the vertical (S), in particular an angle of inclination (α) of from 1.5° to 2° relative to the vertical (S).

3. Injection-moulded hollow body (1) according to any one of the preceding claims,
**characterised in that**
the isolated region (21) formed into the peripheral wall (10) has a depth in its portion (216) formed deepest into the peripheral wall (10) a depth (Tₘₐₓ) of from 0.05 to 5 mm, in particular a depth (Tₘₐₓ) of 0.1 mm, in particular a depth (Tₘₐₓ) of 0.2 mm, in particular a depth (Tₘₐₓ) of 0.3 mm.

4. Injection-moulded hollow body (1) according to any one of the preceding claims,
**characterised in that**
the isolated region (21) has at its narrowest point a width (bₘᵢₙ) of at least 0.5 mm, measured between the through-opening (11, 12, 13, 14) and the distal edge (213), adjacent thereto, of the isolated region (21), in particular a width (bₘᵢₙ) of from 0.5 to 3 mm.

5. Injection-moulded hollow body (1) according to any one of the preceding claims,
**characterised in that**
when seen from above, the surface of the isolated region (21) with the through-opening (11, 12, 13, 14) surrounded thereby has the shape of a conical section and/or of a trapezium with rounded corners, in particular at least in part the shape of a parabola and/or paraboloid, a hyperbola and/or hyperboloid and/or a semicircle.

6. Injection-moulded hollow body (1) according to any one of the preceding claims,
**characterised in that**
the isolated region (21) is provided, in particular in its portions (216) formed the deepest into the peripheral wall (10), with a curved and/or chamfered transition region (212) and/or a transition with a constant tangent into the peripheral wall (10) surrounding the isolated region (21).

7. Injection-moulded hollow body (1) according to claim 6,
**characterised in that**
the radius of curvature (R) is at least R0.05, in particular from R0.05 to R5.0.

8. Injection-moulded hollow body (1) according to any one of the preceding claims,
**characterised in that**
the injection-moulded hollow body (1) is a housing or at least part of a housing of an adjustable fluid distributor, in particular of a rotary valve (3).

9. Adjustable fluid distributor, in particular rotary valve (3), having at least one housing and at least one valve body (30) within the at least one housing, wherein the at least one valve body (30) is rotatably and/or displaceably arranged within the housing, and wherein the at least one housing can be provided or is provided on the outside with at least one connection piece (16, 17, 18, 19),
**characterised in that**
the at least one housing is formed by an injection-moulded hollow body (1) according to any one of the preceding claims.

10. Device for producing an injection-moulded hollow body (1) according to any one of claims 1 to 8 provided with at least one peripheral wall (10) and at least one through-opening (11, 12, 13, 14) passing through said wall, wherein the device comprises at least one injection-moulding outer mould and at least one injection-moulding core, wherein the at least one injection-moulding core and the at least one injection-moulding outer mould form between them a cavity into which plastics material can flow to form the injection-moulded hollow body (1), wherein the at least one injection-moulding core is formed in a conically tapering manner with an inclination of its outer side corresponding to a demoulding angle in order to assist with demoulding of the injection-moulded hollow body (1),
**characterised in that**
the at least one injection-moulding core is provided with at least one protruding region having an angle of inclination that is different from the demoulding angle in order to form an isolated region (21) of the injection-moulded hollow body (1) that surrounds at least one through-opening (11, 12, 13, 14).

11. Vehicle, in particular vehicle having a combustion engine, fuel cell vehicle, batter-powered vehicle, plug-in hybrid vehicle, comprising at least one adjustable fluid distributor in a thermal management system of the vehicle,
**characterised in that**
the at least one adjustable fluid distributor of the thermal management system contains an injection-moulded hollow body (1) according to any one of claims 1 to 8.

## Revendications

1. Corps creux (1) moulé par injection, en particulier corps creux moulé par injection symétrique en rotation, comprenant au moins une paroi périphérique (10) avec une face intérieure (20) et une face extérieure (15) et avec au moins une ouverture de passage (11, 12, 13, 14) traversant la paroi périphérique (10), dans lequel l'au moins une paroi périphérique (10) présente au moins sur sa face intérieure (20) une inclinaison selon un angle de démoulage (β) par rapport à la verticale (S),
**caractérisé en ce que**
l'au moins une ouverture de passage (11, 12, 13, 14) est entourée par une zone dégagée (21), dans lequel, dans la zone dégagée (21), l'angle d'inclinaison (α) de la paroi périphérique (10) diffère de celui à l'extérieur de la zone dégagée (21) afin d'éviter la formation de bavures dans la zone de transition (212) entre la face intérieure (20) de la paroi périphérique (10) et au moins une ouverture de passage (11, 12, 13, 14) et pour prévenir les dommages causés par la formation de bavures sur les éléments venant en contact avec la face intérieure (20) de la paroi périphérique (10) du corps creux (1) moulé par injection, dans lequel la zone dégagée (21) est formée sous la forme d'un évidement dans la paroi périphérique (10).

2. Corps creux (1) moulé par injection selon la revendication 1,
**caractérisé en ce que**
la paroi périphérique (10) présente dans la zone dégagée (21) un angle d'inclinaison (α) inférieur à celui dans la zone située en dehors de cette zone sur la face intérieure (20) de la paroi périphérique (10), en particulier la paroi périphérique (10) présente dans la zone dégagée (21) un angle d'inclinaison (α) de 0° à 2,5° par rapport à la verticale (S), en particulier un angle d'inclinaison (α) de 1,5° à 2° par rapport à la verticale (S).

3. Corps creux (1) moulé par injection selon l'une quelconque des revendications précédentes,
**caractérisé en ce que**
la zone dégagée (21) formée dans la paroi périphérique (10) présente, dans sa section (216) la plus profondément enfoncée dans la paroi périphérique (10), une profondeur (Tₘₐₓ) de 0,05 mm à 0,5 mm, notamment une profondeur (Tₘₐₓ) de 0,1 mm, ainsi qu'une profondeur (Tₘₐₓ) de 0,2 mm, en particulier une profondeur (Tₘₐₓ) de 0,3 mm.

4. Corps creux (1) moulé par injection selon l'une quelconque des revendications précédentes,
**caractérisé en ce que**
la zone dégagée (21) présente, à son point le plus étroit, une largeur (bₘᵢₙ) d'au moins 0,5 mm, mesurée entre l'ouverture de passage (11, 12, 13, 14) et le bord distal (213) adjacent à celle-ci de la zone dégagée (21), en particulier une largeur (bₘᵢₙ) de 0,5 mm à 3 mm.

5. Corps creux (1) moulé par injection selon l'une quelconque des revendications précédentes,
**caractérisé en ce que**
la surface de la zone dégagée (21) avec l'ouverture de passage (11, 12, 13, 14) qui l'entoure présente, en vue de dessus, la forme d'une section conique et/ou d'un trapèze à coins arrondis, en particulier, au moins en partie, la forme d'une parabole et/ou d'un paraboloïde, d'une hyperbole et/ou d'un hyperboloïde et/ou d'un demi-cercle.

6. Corps creux (1) moulé par injection selon l'une quelconque des revendications précédentes,
**caractérisé en ce que**
la zone dégagée (21) est pourvue en particulier dans sa section (216) la plus profondément dans la paroi périphérique (10), d'une zone de transition (212) courbée et/ou chanfreinée et/ou d'une transition tangentielle continue dans la paroi périphérique (10) entourant la zone dégagée (21).

7. Corps creux (1) moulé par injection selon la revendication 6,
**caractérisé en ce que**
le rayon de courbure (R) est d'au moins R0,05, en particulier de R0,05 à R5,0.

8. Corps creux (1) moulé par injection selon l'une quelconque des revendications précédentes,
**caractérisé en ce que**
le corps creux (1) moulé par injection est un boîtier ou au moins une partie d'un boîtier d'un distributeur de fluide réglable, en particulier d'une vanne rotative (3).

9. Distributeur de fluide réglable, en particulier vanne rotative (3), avec au moins un boîtier et au moins un corps de vanne (30) à l'intérieur de l'au moins un boîtier, dans lequel l'au moins un corps de vanne (30) est disposé de manière rotative et/ou coulissante à l'intérieur du boîtier, et dans lequel l'au moins un boîtier peut être pourvu ou est pourvu côté extérieur d'au moins une tubulure de raccordement (16, 17, 18, 19), **caractérisé en ce que**
l'au moins un boîtier est formé à partir d'un corps creux (1) moulé par injection selon l'une des revendications précédentes.

10. Dispositif de fabrication d'un corps creux (1) moulé par injection pourvu d'au moins une paroi périphérique (10) et d'au moins une ouverture de passage (11, 12, 13, 14) traversant celle-ci selon l'une quelconque des revendications 1 à 8, dans lequel le dispositif comprend au moins un moule extérieur de moulage par injection et au moins un noyau de moulage par injection, dans lequel l'au moins un noyau de moulage par injection et l'au moins un moule extérieur de moulage par injection forment entre eux une cavité, peut pénétrer dans le matériau plastique pour former le corps creux (1) moulé par injection, dans lequel l'au moins un noyau moulé par injection est formé de manière conique avec une inclinaison de son côté extérieur correspondant à un angle de démoulage pour soutenir le démoulage du corps creux (1) moulé par injection,
**caractérisé en ce que**
l'au moins un noyau de moulage par injection est pourvu d'au moins une zone saillante présentant un angle d'inclinaison différent de l'angle de démoulage, afin de former une zone dégagée (21) entourant au moins une ouverture de passage (11, 12, 13, 14) du corps creux (1) moulé par injection.

11. Véhicule, en particulier véhicule avec un moteur à combustion interne, véhicule à pile à combustible, véhicule électrique à batterie, véhicule hybride rechargeable, comprenant au moins un distributeur de fluide réglable dans un système de gestion thermique du véhicule,
**caractérisé en ce que**
l'au moins un distributeur de fluide réglable du système de gestion thermique contient un corps creux (1) moulé par injection selon l'une quelconque des revendications 1 à 8.
